# EUROPEAN PATENT APPLICATION

(11) **EP 3 489 825 A1**
(43) Date of publication of application: **29.05.2019**
(21) Application number: 18201831.7
(22) Date of filing: 22.10.2018
(51) Int. Cl.: G06F 9/48, G06F 9/54

(54) **METHOD, APPARATUS AND COMPUTER READABLE STORAGE MEDIUM FOR PROCESSING SERVICE**

(30) Priority: 22.11.2017 CN 201711171775
(71) Applicant: Beijing Xiaomi Mobile Software Co., Ltd., Beijing 100085 (CN)
(72) Inventor: TIAN, Jingyun, Beijing, Beijing 100085 (CN); YANG, Zhe, Beijing, Beijing 100085 (CN); ZHOU, Yingchao, Beijing, Beijing 100085 (CN)
(74) Representative: dompatent von Kreisler Selting Werner - Partnerschaft von Patent- und Rechtsanwälten mbB

(57) **Abstract**

Embodiments of the present disclosure disclose a method and an apparatus. In various embodiments, the apparatus includes interface circuitry and processing circuitry. The interface circuitry receives a request from a client device. The request requests the apparatus to perform a task of information processing and includes a timeout duration. The time duration indicates a maximum duration during which the apparatus is to send a result associated with performing the task to the client device. The processing circuitry determines an expiration time based on a present system time of the apparatus and the timeout duration. The expiration time indicates a final time for the apparatus to send the result associated with performing the task to the client device. The processing circuitry also performs the task of information processing requested by the client device based on the expiration time.

## Description

### TECHNICAL FIELD

The present disclosure relates to the field of information processing technologies.

### BACKGROUND

Currently, most services are done through interactions between clients and servers. In a practical implementation, the client sends a service request to the server. For example, in a distributed system, the service request may be configured to request the server to read or write data. The server receives the service request, and performs service processing based on the service request, such as data read or write operation or the like.

### SUMMARY

This Summary is provided to introduce a selection of aspects of the present disclosure in a simplified form that are further described below in the Detailed Description. This Summary is not intended to identify key features or essential features of the claimed subject matter, nor is it intended to be used to limit the scope of the claimed subject matter.

According to aspects of the disclosure, a method and an apparatus for information processing are provided.

In some embodiments, the method includes: receiving, by an apparatus, a request from a client device, the request requesting the apparatus to perform a task of information processing and including a timeout duration that indicates a maximum duration during which the apparatus is to send a result associated with performing the task to the client device; determining, by the apparatus, an expiration time based on a present system time of the apparatus and the timeout duration, the expiration time indicating a final time for the apparatus to send the result associated with performing the task to the client device; and performing, by the apparatus, the task of information processing requested by the client device based on the expiration time.

In some embodiments, the task of information processing includes a plurality of sub-tasks. The performing the task based on the expiration time includes: querying whether the expiration time is reached when one of the plurality of sub-tasks is completed; and when the expiration time is determined to be reached, determining whether the plurality of sub-tasks is completed; and terminating performing the task of information processing when the plurality of sub-tasks is determined to be incomplete.

In some embodiments, the performing the task based on the expiration time includes: querying whether the expiration time is reached at predetermined time intervals; and when the expiration time is determined to be reached, determining whether the task is completed; and terminating performing the task of information processing when the task is determined to be incomplete.

In some embodiments, the determining the expiration time based on the present system time and the timeout duration includes: adding the present system time and the timeout duration to obtain the expiration time.

In some embodiments, after the performing the task based on the expiration time, the method further includes: when the task is completed before the expiration time is reached, sending a response to the client device to indicate the result associated with performing the task, the response prompting the client device that the task is completed.

In some embodiments, the response further includes data associated with performing the task.

In some embodiments, the method further includes: sending a response to the client device to indicate the result associated with performing the task, the response prompting the client device that the task is incomplete when the expiration time is reached.

In some embodiments, the apparatus includes: a receiving module configured to receive a request from a client device, the request requesting the apparatus to perform the task of information processing and including a timeout duration that indicates a maximum duration during which the apparatus is to send a result associated with performing the task to the client device; a determining module configured to determine an expiration time based on a present system time of the apparatus and the timeout duration, the expiration time indicating a final time for the apparatus to send the result associated with performing the task to the client device; and a processing module configured to perform the task of information processing requested by the client device based on the expiration time.

In some embodiments, the task of information processing includes a plurality of sub-tasks and the processing module is further configured to: query whether the expiration time is reached when one of the plurality of sub-tasks is completed; and when the expiration time is determined to be reached, determine whether the plurality of sub-tasks is completed; and terminate performing the task of information processing when the plurality of sub-tasks is determined to be incomplete.

In some embodiments, the processing module is further configured to: query whether the expiration time is reached at predetermined time intervals; and when the expiration time is determined to be reached, determine whether the task is completed; and terminate performing the task of information processing when the task is determined to be incomplete.

In some embodiments, the processing module is further configured to: add the present system time and the timeout duration to obtain the expiration time.

In some embodiments, the apparatus further includes: a sending module, configured to: when the task is completed before the expiration time is reached, send a response to the client device to indicate the result associated with performing the task, the response prompting the client device that the task is completed.

In some embodiments, the response further includes data associated with performing the task.

In some embodiments, the apparatus is further configured to send a response to the client device to indicate the result associated with performing the task, the response prompting the client device that the task is incomplete when the expiration time is reached.

Aspects of the disclosure also provide computer-readable storage medium storing instructions which when executed by a computer cause the computer to perform the method for information processing.

It is to be understood that, both the foregoing general description and the following detailed description are exemplary and explanatory only and are not restrictive of the present disclosure.

### BRIEF DESCRIPTION OF THE DRAWINGS

The accompanying drawings herein are incorporated in and become parts of the specification, illustrate embodiments consistent with the disclosure and, together with the description, serve to explain the principles of the disclosure.
Fig. 1A is a schematic diagram illustrating a system structure according to an exemplary embodiment;
Fig. 1B is a flow chart illustrating a method for processing a service according to an exemplary embodiment;
Fig. 2 is a flow chart illustrating a method for processing a service according to another exemplary embodiment;
Fig. 3A is a block diagram illustrating a device for processing a service according to an exemplary embodiment;
Fig. 3B is a block diagram illustrating another device for processing a service according to an exemplary embodiment; and
Fig. 4 is a block diagram illustrating an apparatus 400 for processing a service according to an exemplary embodiment.

The specific aspects of the present disclosure, which have been illustrated by the accompanying drawings described above, will be described in detail below. These accompanying drawings and description are not intended to limit the scope of the present disclosure in any manner, but to explain the concept of the present disclosure to those skilled in the art via referencing specific aspects.

### DETAILED DESCRIPTION

Descriptions will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of devices and methods consistent with aspects related to the disclosure as recited in the appended claims.

Before describing the embodiments of the present disclosure in detail, related application scenario and system structure to the embodiments of the present disclosure will be described briefly.

The application scenario related to the embodiments of the present disclosure will be described briefly first.

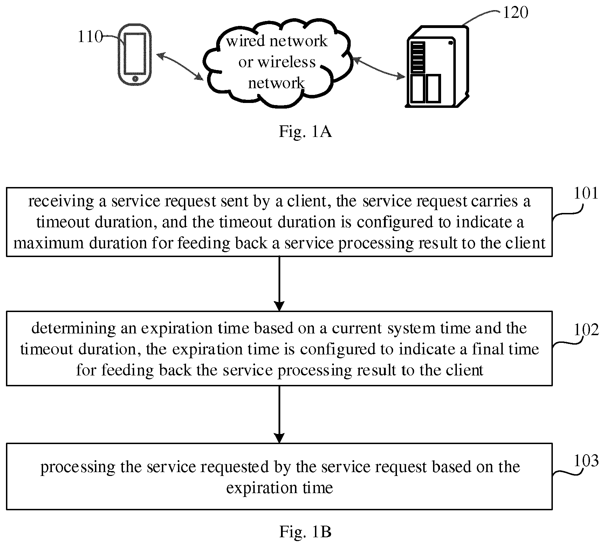

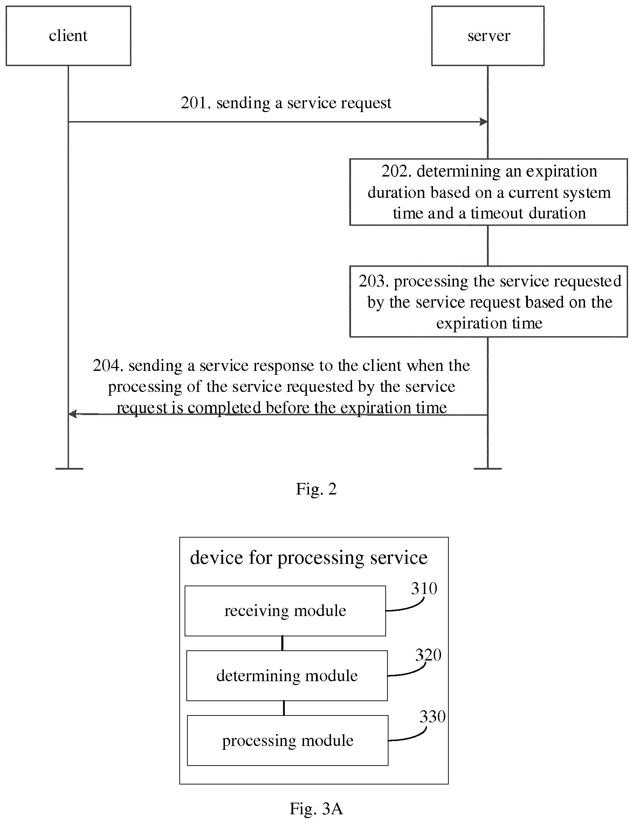

When a client (or a client device) requests a server (or an apparatus) to process services (or perform tasks of information processing) through interaction, different timeout durations will be set for different service requests (or requests). If a service processing result fed back from the server is not received within the timeout duration, the client disconnects from the server, i.e. the service request (or the request) is abandoned. However, since the server may not monitor connection or disconnection with the client during the processing of the service, i.e., it is impossible for the server to know that the service request has been abandoned by the client, the server may still continue to process the service request, thereby resulting in a waste of resources. For this reason, the embodiments of the present disclosure provide a method for processing a service, which may avoid the waste of resources, i.e. achieving to save resources. Specific implementations may be referred to embodiments illustrated as Fig. 1B and Fig. 2.

Next, the system structure related to the embodiments of the present disclosure will be described briefly.

Referring to Fig. 1A, Fig. 1A is a schematic diagram illustrating a system structure according to an exemplary embodiment. The system mainly includes a client 110 (or a client device 110) and a server 120 (or an apparatus 120). The client 110 and the server 120 may be connected with each other via wired network or wireless network. In one possible application scenario, the client 110 and the server 120 may be two nodes in a distributed system.

The client 110 is mainly configured to send the service request to the server 120 to request the server 120 to process the service and to feed back a service processing result (or a result). In a practical implementation, the client 110 may be arranged in a terminal. The terminal may be a phone, a tablet computer, a computer or the like. Alternatively, operations executed by the client 110 may be achieved by web, which is not limited in the embodiments of the present disclosure.

The server 120 may be configured to receive the service request sent by the client 110 and to process the service based on the service request. That is, the server 120 is mainly configured to achieve the method for processing a service provided in the embodiments of the present disclosure. The specific implementations may be referred to embodiments illustrated as Fig. 1B and Fig. 2.

It is to be illustrated that, in a practical implementation, the server 120 may be a single server, or may be a server group including a plurality of servers, which is not limited in the embodiments of the present disclosure.

After the descriptions of the application scenario and the system structure related to the embodiments of the present disclosure, the specific implementations of the method for processing a service related to the embodiments of the present disclosure will be described in detailed now with reference to the drawings.

Referring to Fig. 1B, Fig. 1B is a flow chart illustrating a method for processing a service according to an exemplary embodiment. The method for processing a service may be applied to the system illustrated as Fig. 1A. The method may include the following acts at blocks.

In block 101, a service request (or a request) sent by a client is received. The service request carries a timeout duration. The timeout duration is configured to indicate a maximum duration for feeding back a service processing result (or a result) to the client. In some embodiments, the timeout duration indicates the maximum duration during which the server 120 is to send the result associated with performing the task to the client 110.

In block 102, an expiration time is determined based on a current system time (or a present system time) and the timeout duration. The expiration time is configured to indicate a final time for feeding back the service processing result to the client.

In block 103, the service (or the task of information processing) requested by the service request is processed based on the expiration time.

In the embodiments of the present disclosure, by receiving the service request, sent by the client, carrying the timeout duration, the final time for feeding back the service processing result to the client is determined based on the current system time and the timeout duration. The timeout duration is configured to indicate the maximum duration for feeding back the service processing result to the client. The service requested by the service request is processed based on the determined final time, which avoids still processing the service in a case that the service request is abandoned by the client, thereby saving resources.

Alternatively, processing the service requested by the service request based on the expiration time includes the followings.

When the service requested by the service request includes a plurality of sub-services (or sub-tasks), it is queried whether the expiration time is reached in response to completion of processing any one of the plurality of sub-services.

When the expiration time is reached and a sub-service currently completed is not a last one of the plurality of sub-services, a processing operation of the service requested by the service request is terminated.

Alternatively, processing the service requested by the service request based on the expiration time includes the followings.

During processing of the service requested by the service request, it is queried whether the expiration time is reached at a predetermined time interval.

When the expiration time is reached and the processing of the service is uncompleted, a processing operation of the service requested by the service request is terminated.

Alternatively, determining the expiration time based on the current system time and the timeout duration includes the followings.

A sum operation is performed on the current system time and the timeout duration.

A time obtained after the sum operation is determined as the expiration time.

Alternatively, after processing the service requested by the service request based on the expiration time, the method further includes the followings.

When processing of the service requested by the service request is completed before the expiration time, a service response is sent to the client. The service response is configured to prompt the client that the processing of the service is completed.

Any combination of the above alternative technical solutions may be done to form alternative embodiments of the present disclosure, which is not elaborated in the embodiments of the present disclosure.

Referring to Fig. 2, Fig. 2 is a flow chart illustrating a method for processing a service according to another exemplary embodiment. The method for processing a service may be applied to the system illustrated as Fig. 1A. The method may include the following acts at blocks.

In block 201, a client sends a service request to a server. The server receives the service request sent by the client. The service request carries a timeout duration. The timeout duration is configured to indicate a maximum duration for feeding back a service processing result to the client.

In a practical application scenario, the timeout duration may be set in advance. For example, the timeout duration may be set by the client. Further, for different services, different timeout durations are typically set correspondingly. During a process of requesting the server to process the service, the client may acquire a corresponding preset timeout duration locally for the service requested currently.

Then, the client may generate the service request based on the timeout duration and sends the service request carrying the timeout duration to the server, to inform the server of the maximum duration for feeding back the service processing result to the client. Accordingly, the server receives the service request sent by the client.

It is to be illustrated that, in a practical application scenario, the client may send the service request carrying the timeout duration to the server after receiving a service processing instruction. The service processing instruction may be triggered by a user. The service processing instruction may be triggered by specifying an operation via the user. The specified operation may include a click operation, a slide operation or the like.

For example, service processing options may be set on the client. The user may click the service processing options to trigger the above service processing instruction. After the service processing instruction is received by the client, the client sends the service request carrying the timeout duration to the server according to the above described realizations.

In block 202, the server determines an expiration time based on a current system time and the timeout duration. The expiration time is configured to indicate a final time for feeding back the service processing result to the client.

After the service request sent by the client is received by the server, in order to determine the final time for feeding back the service processing result to the client, the server needs to determine the expiration time based on the current system time and the timeout duration.

In a specific implementation, determining the expiration time based on the current system time and the timeout duration by the server may include the following implementations. The server performs a sum operation on the current system time and the timeout duration, and determines a time obtained after the sum operation as the expiration time.

For example, if the current system time is 13:00, and the timeout duration carried in the above service request is 2 minutes, the time obtained after the sum operation performed on the current system time 13:00 and the timeout duration 2 minutes is 13:02. The server determines the time 13:02 as the expiration time. That is to say, the final time for feeding back the service processing result to the client by the server is 13:02.

In block 203, the server processes the service requested by the service request based on the expiration time.

For example, if the expiration time is 13:02, the server processes the service requested by the service request according to the time 13:02. In a specific implementation, processing by the server the service requested by the service request based on the expiration time may include following realization ways.

**First case:** when the service requested by the service request includes a plurality of sub-services, it is queried whether the expiration time is reached in response to completion of processing any one of the plurality of sub-services. When the expiration time is reached and a sub-service currently completed is not a last one of the plurality of sub-services, a processing operation of the service requested by the service request is terminated.

In a practical application scenario, the service requested by the service request may generally include a plurality of sub-services. In this case, the server may perform the service according to completion situations of processing the plurality of sub-services based on the expiration time.

For example, the service includes a sub-service A, a sub-service B, a sub-service C and a sub-service D, and a processing order for processing the plurality of sub-services by the server is the sub-service A, and then the sub-service B, and then the sub-service C and then the sub-service D. When the processing of the sub-service A is completed by the server, it is queried whether the expiration time 13:02 is reached. If the expiration time 13:02 is not reached, the server continues to process the sub-service B. And so on, when the processing of the sub-service B is completed by the server, it is queried again whether the expiration time 13:02 is reached. If the expiration time 13:02 is not reached, the server continues to process a next sub-service. However, once the expiration time is reached, and a currently completed sub-module is not a last one of the plurality of the sub-services (i.e. the sub-service D), since the client has abandoned the service request, and it has no sense to continue to process by the server the service requested by the service request, in order to avoid a waste of resources, the server terminates the processing operation of the service requested by the service request.

It needs to be noted herein, in the embodiments of the present disclosure, the processing order for processing the sub-services by the server is not limited. The above description is merely exemplary. In a practical implementation, the server may process the sub-services in other processing orders.

**Second case:** during processing of the service requested by the service request, it is queried whether the expiration time is reached at a predetermined time interval. When the expiration time is reached and the processing of the service is uncompleted, a processing operation of the service requested by the service request is terminated.

The predetermined time interval may be customized by the user according to actual demands, or may be set by the server by default, which are not limited in the embodiments of the present disclosure.

In this realization way, the server does not process the service according to the completion situations of processing the plurality of sub-services included in the service, but processes the service requested by the service request based on the expiration time according to a certain time rule.

That is, in this realization way, the server queries whether the expiration time is reached at a certain time interval, regardless of the number of the sub-services included in the service requested by the service request or regardless of the completion situations of processing the sub-services. If the expiration time is reached and the processing of the service is uncompleted, since the client has abandoned the service request, and it has no sense to continue to process the service requested by the service request, in order to avoid a waste of resources, the server terminates the processing operation of the service requested by the service request.

For example, the above predetermined time interval is 30s, during the processing, by the server, of the service requested by the service request, it is queried whether the expiration time 13:02 is reached every 30s. If the expiration time is not reached, the server continues to process the service requested by the service request. In this procedure, once it is queried that the expiration time 13:02 is reached and the processing of the service is uncompleted, in order to avoid the waste of the resources, the server terminates the processing operation of the service requested by the service request.

Until now, the method for processing a service described in the embodiment of the present disclosure can be implemented. Further, in a practical application scenario, the following acts at block 204 may further be included.

In block 204, when processing of the service requested by the service request is completed before the expiration time, a service response is sent to the client. The service response is configured to prompt the client that the processing of the service is completed.

If the processing of the service requested by the service request is completed by the server before the expiration time, it is indicated that the processing of the service requested by the service request is not overtime. In a practical application scenario, the server may send the service response to the client to inform the client of the completion of processing the service requested by the service request. Accordingly, after the service response is received by the client, it may be determined that the current service request is successfully done.

Further, the service response may also include service processing data (or data associated with performing the task). For example, when the service request is configured to indicate data reading from the server, the service response may include data requested to be read by the client.

In the embodiments of the present disclosure, by receiving the service request, sent by the client, carrying the timeout duration, the final time for feeding back the service processing result to the client is determined based on the current system time and the timeout duration. The timeout duration is configured to indicate the maximum duration for feeding back the service processing result to the client. The service requested by the service request is processed based on the determined final time, which avoids still processing the service in a case that the service request is abandoned by the client, thereby saving resources.

Fig. 3A is a block diagram illustrating a device for processing a service according to an exemplary embodiment. Referring to Fig. 3A, the device includes a receiving module 310, a determining module 320 and a processing module 330. In some embodiments, the device is an apparatus for information processing.

The receiving module 310 is configured to receive a service request sent by a client. The service request carries a timeout duration, and the timeout duration is configured to indicate a maximum duration for feeding back a service processing result to the client.

The determining module 320 is configured to determine an expiration time based on a current system time and the timeout duration. The expiration time is configured to indicate a final time for feeding back the service processing result to the client.

The processing module 330 is configured to process the service requested by the service request based on the expiration time.

Alternatively, the processing module 330 is configured to, when the service requested by the service request includes a plurality of sub-services, query whether the expiration time is reached in response to completion of processing any one of the plurality of sub-services.

The processing module 330 is configured to, when the expiration time is reached and a sub-service currently completed is not a last one of the plurality of sub-services, terminate a processing operation of the service requested by the service request.

Alternatively, the processing 330 is further configured to, during processing of the service requested by the service request, query whether the expiration time is reached at a predetermined time interval.

The processing module 330 is configured to, when the expiration time is reached and the processing of the service is uncompleted, terminate a processing operation of the service requested by the service request.

Alternatively, the determining module 320 is configured to perform a sum operation on the current system time and the timeout duration.

The determining module 320 is configured to determine a time obtained after the sum operation as the expiration time.

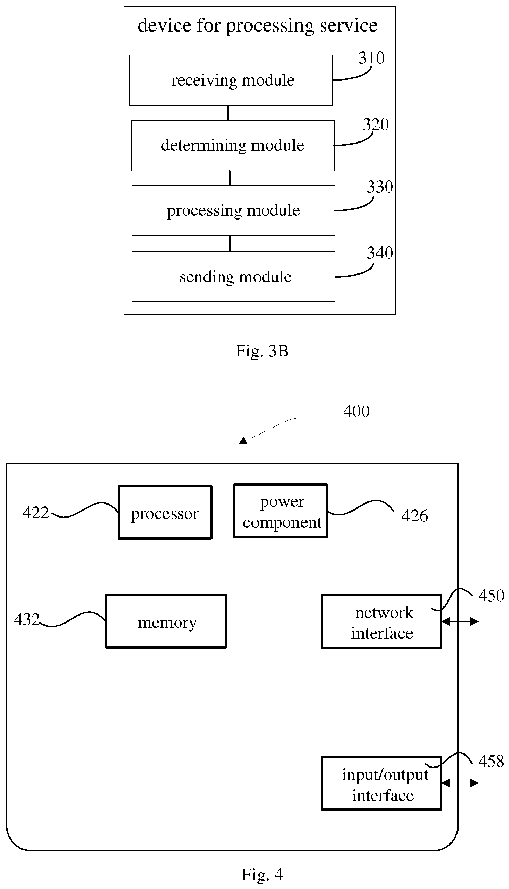

Alternatively, referring to Fig. 3B, the device further includes a sending module 340.

The sending module 340 is configured to send a service response to the client when processing of the service requested by the service request is completed before the expiration time. The service response is configured to prompt the client that the processing of the service is completed.

In the embodiments of the present disclosure, by receiving the service request, sent by the client, carrying the timeout duration, the final time for feeding back the service processing result to the client is determined based on the current system time and the timeout duration. The timeout duration is configured to indicate the maximum duration for feeding back the service processing result to the client. The service requested by the service request is processed based on the determined final time, which avoids still processing the service in a case that the service request is abandoned by the client, thereby saving resources.

With respect to the device in the foregoing embodiments, specific manners in which the respective modules perform the operations have been described in detail in the embodiments related to the method, and the detailed description will not be given here.

Fig. 4 is a block diagram illustrating an apparatus 400 for processing a service according to an exemplary embodiment. For example, the apparatus 400 may be provided as a server. Referring to Fig. 4, the apparatus 400 includes a processor 422 which further includes one or more processors, and memory resources, represented by a memory 432, for storing instructions executable by the processor 422, such as application programs. The application programs stored in the memory 432 may include one or more modules each corresponding to a set of instructions. In addition, the processor 422 is configured to execute instructions to execute the method for processing a service in embodiments illustrated as Fig. 1B or Fig. 2.

The apparatus 400 may also include a power component 426 configured to perform power management of the apparatus 400, a wired or wireless network interface 450 configured to connect the apparatus 400 to the network, and an input/output (I/O) interface 458. The apparatus 400 may operate based on an operating system stored in the memory 432, such as Windows Server™, Mac OS X™, Unix™, Linux™, FreeBSD™, or the like.

In an exemplary embodiment, there is also provided a non-transitory computer-readable storage medium including instructions, such as the memory 432 including instructions executable by the processor 422 of the apparatus 400 to perform the above method. For example, the non-transitory computer-readable storage medium may be a read-only memory (ROM), a random access memory (RAM), a compact disc read-only memory (CD-ROM), a magnetic tape, a floppy disk, an optical data storage device, or the like.

A non-transitory computer-readable storage medium is provided. When instructions stored in the storage medium are executed by a processor of a server, the server may execute the method for processing a service provided in embodiment illustrated as Fig. 1B or Fig. 2.

A computer program product including instructions is provided. When the computer program product is running on a computer, is causes the computer to execute the method of processing a service provided in embodiment illustrated as Fig. 1B or Fig. 2.

It is noted that the various modules, sub-modules, units, and components in the present disclosure can be implemented using any suitable technology. For example, a module may be implemented using circuitry, such as an integrated circuit (IC). As another example, a module may be implemented as a processing circuit executing software instructions.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope and spirit of the disclosure being indicated by the following claims.

It is to be understood that, the present disclosure is not limited to the exact construction that has been described above and illustrated in the accompanying drawings, and that various modifications and changes can be made without departing form the scope thereof. It is intended that the scope of the disclosure only be limited by the appended claims.

## Claims

1. A method for information processing, comprising:
receiving, by an apparatus, a request from a client device, the request requesting the apparatus to perform a task of information processing and including a timeout duration that indicates a maximum duration during which the apparatus is to send a result associated with performing the task to the client device;
determining, by the apparatus, an expiration time based on a present system time of the apparatus and the timeout duration, the expiration time indicating a final time for the apparatus to send the result associated with performing the task to the client device; and
performing, by the apparatus, the task of information processing requested by the client device based on the expiration time.

2. The method according to claim 1, wherein the task of information processing comprises a plurality of sub-tasks and the performing the task based on the expiration time comprises:
querying whether the expiration time is reached when one of the plurality of sub-tasks is completed; and
when the expiration time is determined to be reached,
determining whether the plurality of sub-tasks is completed; and
terminating performing the task of information processing when the plurality of sub-tasks is determined to be incomplete.

3. The method according to claim 1, wherein the performing the task based on the expiration time comprises:
querying whether the expiration time is reached at predetermined time intervals; and
when the expiration time is determined to be reached,
determining whether the task is completed; and
terminating performing the task of information processing when the task is determined to be incomplete.

4. The method according to any one of claims 1 to 3, wherein the determining the expiration time based on the present system time and the timeout duration comprises:
adding the present system time and the timeout duration to obtain the expiration time.

5. The method according to any one of claims 1 to 4, after the performing the task based on the expiration time, further comprising:
when the task is completed before the expiration time is reached, sending a response to the client device to indicate the result associated with performing the task, the response prompting the client device that the task is completed.

6. The method according to claim 5, wherein the response further comprises data associated with performing the task.

7. The method according to any one of claims 2 to 6, further comprising:
sending a response to the client device to indicate the result associated with performing the task, the response prompting the client device that the task is incomplete when the expiration time is reached.

8. An apparatus for information processing, comprising:
a receiving module configured to receive a request from a client device, the request requesting the apparatus to perform the task of information processing and including a timeout duration that indicates a maximum duration during which the apparatus is to send a result associated with performing the task to the client device;
a determining module configured to determine an expiration time based on a present system time of the apparatus and the timeout duration, the expiration time indicating a final time for the apparatus to send the result associated with performing the task to the client device; and
a processing module configured to perform the task of information processing requested by the client device based on the expiration time.

9. The apparatus according to claim 8, wherein the task of information processing comprises a plurality of sub-tasks and the processing module is further configured to:
query whether the expiration time is reached when one of the plurality of sub-tasks is completed; and
when the expiration time is determined to be reached,
determine whether the plurality of sub-tasks is completed; and
terminate performing the task of information processing when the plurality of sub-tasks is determined to be incomplete.

10. The apparatus according to claim 8, wherein the processing module is further configured to:
query whether the expiration time is reached at predetermined time intervals; and
when the expiration time is determined to be reached,
determine whether the task is completed; and
terminate performing the task of information processing when the task is determined to be incomplete.

11. The apparatus according to any one of claims 8 to 10, wherein the processing module is further configured to:
add the present system time and the timeout duration to obtain the expiration time.

12. The apparatus according to any one of claims 8 to 11, further comprising:
a sending module, configured to: when the task is completed before the expiration time is reached, send a response to the client device to indicate the result associated with performing the task, the response prompting the client device that the task is completed.

13. The apparatus according to claim 12, wherein the response further comprises data associated with performing the task.

14. The apparatus according to any one of claims 9 to 13, further configured to:
send a response to the client device to indicate the result associated with performing the task, the response prompting the client device that the task is incomplete when the expiration time is reached.

15. A computer-readable storage medium storing a program executable by a processor to perform the method of any one of claims 1 to 7.
